# EUROPEAN PATENT APPLICATION

(11) **EP 4 803 820 A1**
(43) Date of publication of application: **09.09.2026**
(21) Application number: 24892917.6
(22) Date of filing: 15.08.2024
(51) Int. Cl.: F24F 11/88, F24F 11/89, F24F 11/84, F24F 11/36, F24F 11/64

(54) **AIR CONDITIONER CONTROL METHOD AND APPARATUS, DEVICE, AND STORAGE MEDIUM**

(30) Priority: 24.11.2023 CN 202311592199
(71) Applicant: Foshan Shunde Midea Electric Science and Technology Co., Ltd., Foshan, Guangdong 528300 (CN); GD Midea Air-Conditioning Equipment Co., Ltd., Foshan, Guangdong 528311 (CN)
(72) Inventor: DENG, Gucheng, Foshan, Guangdong 528300 (CN); FU, Zhaoqiang, Foshan, Guangdong 528300 (CN); ZHANG, Wenkai, Foshan, Guangdong 528300 (CN)
(74) Representative: Ran, Handong
(86) International application number: PCT/CN2024/112520
(87) International publication number: WO 2025/107755

(57) **Abstract**

The present application discloses an air conditioner control method and apparatus, a device, and a storage medium. An air conditioner comprises an indoor unit, an outdoor unit, and an energy storage module; a refrigerant pipe is provided between the indoor unit and the outdoor unit; and an electric valve is provided on the refrigerant pipe. The method comprises: acquiring a power supply state indicating whether the air conditioner is powered on or not; and if it is determined, on the basis of the power supply state, that the air conditioner has been powered on, generating first instruction information, wherein the first instruction information is used for instructing the energy storage module to switch to a charging mode.

## Description

### CROSS-REFERENCE TO RELATED APPLICATION

This application claims priority to Chinese Patent Application No. 202311592199.7, filed on November 24, 2023, the disclosure of which is hereby incorporated by reference in its entirety.

### TECHNICAL FIELD

The present application relates to the field of control technology, and in particular to a control method and apparatus for an air conditioner, a device and a storage medium.

### BACKGROUND

At present, air conditioners realize the refrigeration and heating by circulating refrigerant in a pipeline system to exchange heat. However, due to flammable and explosive characteristics of the refrigerant, air conditioners have certain hidden safety hazards.

In order to ensure the safety of the air conditioner, the air conditioner is provided with an electric valve. The electric valve is usually used in the air conditioner, and the air conditioner can control an opening degree of the electric valve by sending pulse signals or turning on and off a power supply to close and open a flow path. Generally speaking, the air conditioner will control the electric valve to be in a set state before it stops operating. The electric valve may also be configured to control the circulation of the refrigerant. For example, when the air conditioner is not working, in order to prevent residual refrigerant in a room, it is necessary to perform driving based on an energy storage circuit, to close the electric valve in time. However, in a practical application, it is often impossible to guarantee that the energy storage circuit has sufficient energy to close the electric valve in time when the air conditioner is not working, which results in insufficient safety performance of the air conditioner.

### SUMMARY

In view of this, embodiments of the present application provides a control method and apparatus for an air conditioner, a device and a storage medium, which aim at improving the safety of the air conditioner.

The technical solutions of the embodiments of the present application are implemented as follows.

According to a first aspect, an embodiment of the present application provides a control method for an air conditioner. The air conditioner includes indoor units, an outdoor unit and an energy storage component. A refrigerant pipeline is arranged between the indoor units and the outdoor unit. An electric valve is arranged on the refrigerant pipeline. The method includes the following operations.

A power supply state indicating whether the air conditioner is powered on is acquired.

It is determined that the air conditioner is powered on based on the power supply state, and first indication information is generated, in which the first indication information is configured to instruct the energy storage component to switch to a charging mode.

In some embodiments, the method further includes the following operations.

It is determined that the air conditioner is not powered on based on the power supply state, first control information configured to instruct the energy storage component to switch to a discharging mode to supply power to the electric valve is generated, and the electric valve is controlled to be closed.

In some embodiments, the air conditioner includes a plurality of electronic expansion valves respectively corresponding to the indoor units, and the method further includes the following operations.

It is determined that the air conditioner is powered on based on the power supply state, and second indication information is generated. The second indication information is configured to instruct the plurality of electronic expansion valves to be reset in sequence, then instruct the electric valve to be reset, and close the electric valve.

Alternatively, the second indication information is configured to instruct the electric valve to be reset and close the electric valve, and then instruct the plurality of electronic expansion valves to be reset in sequence.

In some embodiments, the method further includes the following operations.

It is determined that charging of the energy storage component is completed, resetting of the plurality of electronic expansion valves is completed and the electric valve is closed, and fourth indication information is generated, in which the fourth indication information is configured to instruct the electric valve to operate to a set opening degree.

In some embodiments, the method further includes the following operations.

It is determined that the electric valve operates to the set opening degree, and second control information is generated in response to start-up indication information of the air conditioner, in which the second control information is configured to control a start-up operation of the air conditioner.

In some embodiments, the air conditioner includes a plurality of electronic expansion valves respectively corresponding to the indoor units, and the method further includes the following operations.

It is determined that charging of the energy storage component is completed, and fifth indication information or sixth indication information is generated. The fifth indication information is configured to instruct the electric valve to be reset, and then instruct the plurality of electronic expansion valves to be reset in sequence.

The sixth indication information is configured to instruct the plurality of electronic expansion valves to be reset in sequence, and then instruct the electric valve to be reset.

In some embodiments, the method further includes the following operations.

It is determined that resetting of the electric valve and the plurality of electronic expansion valves is completed, and third control information is generated in response to a start-up instruction of the air conditioner, in which the third control information is configured to control a start-up operation of the air conditioner.

According to a second aspect, an embodiment of the present application provides a control apparatus for an air conditioner. The air conditioner includes indoor units, an outdoor unit and an energy storage component. A refrigerant pipeline is arranged between the indoor units and the outdoor unit. An electric valve is arranged on the refrigerant pipeline. The control apparatus includes an acquisition component and a determination component.

The acquisition component is configured to acquire a power supply state indicating whether the air conditioner is powered on.

The determination component is configured to determine that the air conditioner is powered on based on the power supply state, and generate first indication information, in which the first indication information is configured to instruct the energy storage component to switch to a charging mode.

In some embodiments, the control apparatus is arranged on a main board of the outdoor unit of the air conditioner, and the control apparatus includes a controller, a power supply circuit and an energy storage circuit. The power supply circuit is configured to convert an external power supply and then supply power to the controller, and the energy storage circuit is arranged between an output end of the power supply circuit and a power supply end of the controller.

According to a third aspect, an embodiment of the present application provides an electronic device including a processor and a memory for storing computer programs executable on the processor.

The processor is configured to execute operations of the method according to the first aspect when running the computer programs.

According to a fourth aspect, an embodiment of the present application provides a computer storage medium having stored thereon computer programs that when executed by a processor, perform operations of the method according to the first aspect.

The technical solution provided by the embodiment of the present application provides a control method for an air conditioner. The air conditioner includes indoor units, an outdoor unit and an energy storage component. A refrigerant pipeline is arranged between the indoor units and the outdoor unit. An electric valve is arranged on the refrigerant pipeline. The method includes the following operations. A power supply state indicating whether the air conditioner is powered on is acquired. It is determined that the air conditioner is powered on based on the power supply state, and first indication information is generated, in which the first indication information is configured to instruct the energy storage component to switch to a charging mode. In this way, by arranging the energy storage component on the air conditioner and controlling the energy storage component to be charged in advance when the air conditioner is in the powered state, it is ensured that the energy storage component has sufficient energy to drive the air conditioner to control the electric valve, and the safety of the air conditioner is improved.

### BRIEF DESCRIPTION OF THE DRAWINGS

FIG. 1 is a schematic diagram of an air conditioner according to an embodiment of the present application.
FIG. 2 is a schematic flow chart of a control method for an air conditioner according to an embodiment of the present application.
FIG. 3 is a schematic diagram of an air conditioning control system according to an application example of the present application.
FIG. 4 is a schematic diagram of a power failure backup power supply system of an air conditioning controller according to an application example of the present application.
FIG. 5 is a schematic diagram of a principle of an energy storage circuit according to an application example of the present application.
FIG. 6 is a schematic workflow diagram of a charging BUCK circuit according to an application example of the present application.
FIG. 7 is a schematic flow chart of a first scheme of a power-on control of an air conditioner with an energy storage circuit according to an application example of the present application.
FIG. 8 is a schematic flow chart of a second scheme of a power-on control of an air conditioner with an energy storage circuit according to an application example of the present application.
FIG. 9 is a schematic flow chart of a third scheme of a power-on control of an air conditioner with an energy storage circuit according to an application example of the present application.
FIG. 10 is a schematic diagram of a control apparatus for an air conditioner according to an embodiment of the present application.
FIG. 11 is a schematic diagram of an electronic device according to an embodiment of the present application.

### List of reference symbols

indoor unit 1;
outdoor unit 2;
electric valve 3;
electronic expansion valve 4.

### DETAILED DESCRIPTION

The present application will be further described below in combination with the accompanying drawings and the embodiments.

Unless defined otherwise, all technical and scientific terms used herein have the same meaning as commonly understood by those skilled in the art to which the present application belongs. The terms used herein in the specification of the present application are for the purpose of describing specific embodiments only and are not intended to limit the present application.

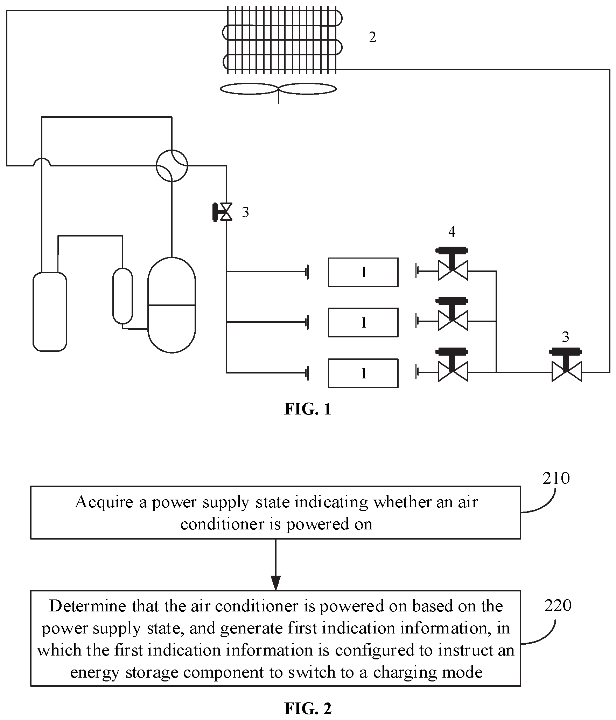

An embodiment of the present application provides an air conditioner. As shown in FIG. 1, the air conditioner includes an indoor unit 1, an outdoor unit 2 and an energy storage component, a refrigerant pipeline is arranged between the indoor unit 1 and the outdoor unit 2, an electric valve 3 is arranged on the refrigerant pipeline, and the air conditioner also includes an electronic expansion valve 4 corresponding to the indoor unit 1.

It should be noted that the air conditioner is generally provided with a power failure backup power supply system, which includes an energy storage component in which (a supercapacitor or a lithium battery) + a BUCK circuit + a BOOST circuit can be used. For example, a control chip is arranged between the energy storage component and the electric valve 3. When the air conditioner is not powered on, for example, when the air conditioner is in a power-off state, the energy storage component can supply power to the control chip to drive the control chip, to control an opening and closing state of the electric valve 3. In order to ensure that the electric valve 3 can be completely closed, the energy storage component needs to have sufficient energy to drive the control chip.

In an example, an operation mode of the energy storage component includes a charging mode and a discharging mode. For example, when the energy storage component stores the energy by a supercapacitor, if it is determined that the capacity of the supercapacitor is insufficient, a control apparatus controls the energy storage component to switch to the charging mode, and at this time, the BUCK circuit charges the supercapacitor. When the power supply is shut off, the control apparatus controls the energy storage component to switch to the discharging mode at this time, the BOOST circuit discharges outward at this time, and the energy storage component automatically supplies power, thereby ensuring that the air conditioner can control the electric valve 3 to perform the closing action. It should be noted that the electric valve 3 is configured to control the circulation of the refrigerant. For example, when the power supply of the air conditioner is suddenly powered down, the air conditioner electronic control controls the electric valve 3 to be closed based on the energy storage component to ensure that the electric valve is in a closed state, which avoids the leakage of the refrigerant.

It should be noted that the electronic expansion valve 4 is arranged in a refrigerant branch corresponding to the indoor unit, and configured to adjust the flow rate of the refrigerant flowing through the indoor unit. In practical applications, the flow rate and the flow velocity of the refrigerant in the air conditioner can be controlled by adjusting the opening degree of the electronic expansion valve 4 during the operation of the air conditioner. In general, the valve opening degree of the electronic expansion valve 4 is adjusted using a stepper motor. Specifically, the electronic expansion valve 4 is controlled by controlling the opening degree of the electronic expansion valve 4 according to the received pulse signal, and the electronic expansion valve 4 generates a magnetic field by a coil through the current and acts on a valve needle to drive the valve needle to rotate.

It should be noted that the electronic expansion valve 4 is controlled by an open-loop control, and the open-loop control is a control mode in which a control signal is directly applied to a controlled object without a feedback control signal to achieve a desired effect. In some embodiments, since the electronic expansion valve 4 is driven based on a stepper motor, there may be a difference between the actual position of the valve of the electronic expansion valve 4 and the position to be reached by the theoretical design due to the out-of-step phenomenon of the stepper motor. Therefore, the electronic expansion valve 4 needs to be "zeroed" reset controlled every time the power is powered on. Accordingly, in order to improve the reliability of the electric valve 3, the electric valve 3 also needs to be reset to "zero".

An embodiment of the present application also provides a control method for an air conditioner, which includes the following operations.

At operation 210, a power supply state indicating whether the air conditioner is powered on is acquired.

Here, the air conditioner is in a power supply state in which the air conditioner is powered on when the power supply energy can be normally supplied. Correspondingly, the air conditioner may be in an on state or a standby state after the air conditioner is powered on. When the power supply cannot be delivered normally, the air conditioner is in an unpowered power supply state, and the air conditioner is in a shutdown state. Exemplarily, the air conditioner may acquire a power supply state based on a detection circuit, for example, determine whether the power supply is on based on the detected voltage and/or current signals, to determine whether the air conditioner is powered on.

At operation 220, it is determined that the air conditioner is powered on based on the power supply state, and first indication information is generated, in which the first indication information is configured to instruct the energy storage component to switch to the charging mode.

Here, it is determined that the air conditioner is powered on based on the power supply state, and the first indication information is generated, in which the first indication information is configured to instruct the energy storage component to switch to the charging mode. Exemplarily, the charging BUCK circuit of the energy storage component charges the supercapacitor or the lithium battery of the energy storage circuit at this time.

In this way, by arranging the energy storage component on the air conditioner and controlling the energy storage component to be charged in advance when the air conditioner is in the powered state, it is ensured that the energy storage component has sufficient energy to drive the air conditioner to control the electric valve, and the safety of the air conditioner is improved.

In some embodiments, the method further includes the following operations.

It is determined that the air conditioner is not powered on based on the power supply state, first control information configured to instruct the energy storage component to switch to the discharging mode to supply power to the electric valve is generated, and the electric valve is controlled to be closed.

Here, it is determined that the air conditioner is not powered on based on the power supply state. At this time, it is indicated that the air conditioner is not powered on, the air conditioner may be in a power-off state, and first control information is generated. The first control information is configured to instruct the energy storage component to switch to the discharging mode to supply power to the electric valve. The electric valve is controlled to be closed.

Exemplarily, the air conditioner is not powered on, the air conditioner is in a power-off state, and in order to avoid the leakage of the refrigerant in the air conditioner, it is necessary to control the electric valve to be closed. In order to provide the energy for controlling the closing of the electric valve, at this time, the energy storage component is switched to the discharging mode, and the BOOST circuit discharges to supply power to the electric valve, thereby avoiding the leakage of the refrigerant and improving the safety of the air conditioner.

In some embodiments, the air conditioner further includes an electronic expansion valve corresponding to the indoor unit, and the method further includes the following operations.

It is determined that the air conditioner is powered on based on the power supply state, and second indication information is generated. The second indication information is configured to instruct the electronic expansion valves to be reset in sequence, then instruct the electric valve to be reset, and close the electric valve.

Alternatively, the second indication information is configured to instruct the electric valve to be reset and close the electric valve, and then instruct the electronic expansion valves to be reset in sequence.

Here, it is determined that the air conditioner is powered on based on the power supply state, and second indication information is generated. The second indication information is configured to instruct the electronic expansion valves to be reset in sequence, then instruct the electric valve to be reset, and close the electric valve, or configured to instruct the electric valve to be reset and close the electric valve, and then instruct the electronic expansion valves to be reset in sequence. Here, the first indication information and the second indication information are generated simultaneously after it is determined that the air conditioner has been powered on. That is, the operation of switching the energy storage component to the charging mode and the reset operation of the electronic expansion valve and electric valve are performed simultaneously. In this way, the control time is saved and the operation efficiency is improved.

Exemplarily, when it is determined that the air conditioner is powered on, it is necessary to reset the electronic expansion valve and the electric valve based on the power supply at this time, to facilitate the subsequent control of the electronic expansion valve and the electric valve and ensure the operation reliability of the electronic expansion valve and the electric valve. In the embodiment of the present application, in order to reduce the power of the external power supply, the electronic expansion valve and the electric valve do not work at the same time, and in order to further reduce the power of the external power supply, the electronic expansion valves are controlled to be reset in sequence compared to resetting a plurality of electronic expansion valves at the same time. Therefore, the second indication information is generated. The second indication information is configured to instruct the electronic expansion valves to reset in sequence, then instruct the electric valve to reset, and close the electric valve, or configured to instruct the electric valve to reset and close the electric valve, and then instruct the electronic expansion valves to reset in sequence.

Here, the specific operations of the reset control of the electronic expansion valve include: (1) a valve spool is rotated clockwise to a maximum opening position; (2) the valve spool is rotated counterclockwise to a minimum opening position; and (3) the valve spool is rotated clockwise to a middle position (an opening degree required for the standby).

Here, the specific operations of the reset control of the electric valve include: (1) a valve spool is rotated clockwise to a maximum opening position; (2) the valve spool is rotated counterclockwise to a minimum opening position; and (3) the valve spool is rotated clockwise to a middle position (an opening degree required for the standby).

Here, controlling the electric valve to be closed can avoid the problem of the leakage of the refrigerant caused by sudden power failure when the energy storage component is in the charging mode after power-on. At this time, the energy storage component may not have sufficient energy to control the electric valve to be closed. Therefore, at this time, the electric valve is reset and then the electric valve is controlled to be closed.

In some embodiments, the method further includes the following operations.

It is determined that the charging of the energy storage component is completed, the resetting of each electronic expansion valve is completed and the electric valve is closed, and fourth indication information is generated, in which the fourth indication information is configured to instruct the electric valve to operate to a set opening degree.

Here, it is determined that the charging of the energy storage component is completed, and the energy storage component already has sufficient energy to control the electric valve to be closed at this time. When the resetting of each electronic expansion valve is completed, the position of each electronic expansion valve is accurate at this time, which is beneficial to the subsequent adjustment of the flow rate of the refrigerant by air conditioner and ensures the smooth work of the air conditioner. When the electric valve is closed, the leakage of the refrigerant caused by the sudden power failure can be avoided. In response to the completion of the charging of the energy storage component, and the completion of the resetting of each electronic expansion valve and the completion of the closing of the electric valve, the fourth indication information is generated, in which the fourth indication information is configured to instruct the electric valve to operate to a set opening degree. The set opening degree here may be the opening degree required for the standby described above, that is, the valve spool of the electric valve is rotated clockwise to a middle position.

In this way, by operating the electric valve to the set opening degree, the balance of the refrigerant in the air conditioner can be ensured in order to response to a subsequent air conditioning operation command.

In some embodiments, the method further includes the following operations.

It is determined that the electric valve operates to the set opening degree, and second control information is generated in response to start-up indication information of the air conditioner, in which the second control information is configured to control a start-up operation of the air conditioner.

Here, when it is determined that the electric valve operates to the set opening degree (the set opening degree here may be an opening degree required for start-up), second control information is generated in response to the start-up indication information of the air conditioner, in which the second control information is configured to control the start-up operation of the air conditioner. In this way, after the air conditioner is powered on and the air conditioner is connected to the power supply, and before the air conditioner is started, the energy storage component is charged. In the subsequent operation process of the air conditioner, if the air conditioner is powered off, it is ensured that the energy storage component has sufficient energy to control the electric valve to be closed without considering the energy state of the energy storage component, which avoids the leakage of the refrigerant, and improves the safety of the air conditioner. In addition, the electronic expansion valve or the electric valve are sequentially reset, which saves the time, avoids the reset operation in the subsequent operation process of the air conditioner after being started, and improves the user experience. Furthermore, by successively resetting the electronic expansion valve and the electric valve, and sequentially resetting the electronic expansion valves, the power of the power supply is reduced and the power of the power supply is minimized.

In some embodiments, the air conditioner includes an electronic expansion valve corresponding to the indoor unit, and the method further includes the following operations.

It is determined that the charging of the energy storage component is completed, and fifth indication information or sixth indication information is generated. The fifth indication information is configured to instruct the electric valve to be reset, and then instruct the electronic expansion valves to be reset in sequence.

The sixth indication information is configured to instruct the electronic expansion valves to be reset in sequence, and then instruct the electric valve to be reset.

Here, the fifth indication information or the sixth indication information is generated after it is determined that the charging of the energy storage component is completed. The reset operation of the electronic expansion valve and the electric valve is in a serial relationship with the charging of the energy storage circuit, that is, the electronic expansion valve and the electric valve are reset only when the charging of the energy storage component is completed. In this way, the power of the power supply is reduced, the cost of the power supply is saved, and in addition, the energy storage component also has sufficient energy to perform the closing action of the electric valve, compared with the operation that after the air conditioner is powered on, the energy storage component is instructed to switch to the charging mode and the electronic expansion valve or the electric valve are reset at the same time.

Here, the fifth indication information is configured to instruct the electric valve to be reset, and then instruct the electronic expansion valves to be reset in sequence. In this way, the electric valve is reset first, so that the balance of the system refrigerant can be ensured, and the start-up instruction can be responded immediately after the electronic expansion valve completes the reset operation.

Here, the sixth indication information is configured to instruct the electronic expansion valves to be reset in sequence, and then instruct the electric valve to be reset. In this way, by resetting the electric valve later, the leakage of the refrigerant can be avoided, and the safety is higher.

In some embodiments, the method further includes the following operations.

It is determined that the resetting of the electric valve and the electronic expansion valves is completed, and third control information is generated in response to the start-up instruction of the air conditioner, in which the third control information is configured to control a start-up operation of the air conditioner.

Here, when it is determined that the resetting of the electric valve and the respective electronic expansion valves is completed, the second control information is generated in response to the start-up indication information of the air conditioner, in which the second control information is configured to control the start-up operation of the air conditioner. In this way, after the air conditioner is powered on and the air conditioner is connected to the power supply, and before the air conditioner is started, the energy storage component is charged. In the subsequent operation process of the air conditioner, if the air conditioner is powered off, it is ensured that the energy storage component has sufficient energy to control the electric valve to be closed without considering the energy state of the energy storage component, which avoids the leakage of the refrigerant, and improves the safety of the air conditioner.

In addition, after it is determined that the charging of the energy storage circuit is completed, the energy storage circuit has sufficient energy to control the electric valve to be closed at this time, and then the electronic expansion valve and the electric valve are reset in sequence, which improves the safety of the system, avoids the reset in the subsequent operation process of the air conditioner after being started, and improves the user experience. Furthermore, by successively resetting the electronic expansion valve and the electric valve, and sequentially resetting the electronic expansion valves, the power of the power supply is reduced and the power of the power supply is minimized.

Hereinafter, the embodiments of the present application will be described in detail with reference to an application example.

In the air conditioning field, the stepping motor electronic expansion valve is usually adopted for the control of the flow rate of the refrigerant. The electronic expansion valve is controlled by controlling the opening degree of the expansion valve according to the received pulse signal, and the electronic expansion valve generates a magnetic field by the coil through the current and acts on a valve needle to drive the valve needle to rotate. The electronic expansion valve is controlled by an open-loop control, and needs to be reset to zero every time it is powered on. When the electronic expansion valve works, it will generate a large pulse current.

In order to make the electric valve of the outdoor unit be closed when the air conditioner is powered off, the air conditioner needs to be provided with an energy storage circuit, and in addition, it is ensured that the energy storage has sufficient energy to close the electric valve.

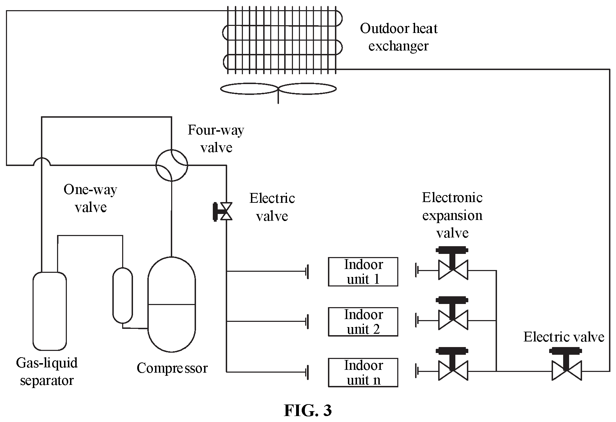

Based on this, the present application example provides an air conditioning control system. As shown in FIG. 3, the control system includes the following components.
1. An outdoor heat exchanger (that is, the outdoor unit described above).
2. An indoor unit 1 ... an indoor unit n (that is, the indoor unit described above).
3. A plurality of electronic expansion valves; the plurality of electronic expansion valves are arranged in correspondence with the indoor unit 1 ... the indoor unit n, and are arranged on a refrigerant branch corresponding to the indoor unit, and the plurality of electronic expansion valves are configured to adjust the flow rate of the refrigerant flowing through a respective indoor unit.
4. An electric valve; the electric valve is arranged on a refrigerant pipeline between the indoor unit and the outdoor unit, and configured to control the circulation of the refrigerant.
5. A four-way valve; a state of the four-way valve includes a first state in which the refrigerant of a compressor first flows to a first heat exchanger in the outdoor unit, and a second state in which the refrigerant of the compressor first flows to a second heat exchanger in the indoor unit. The four-way valve controls the air conditioner to enter a heating mode or a cooling mode by switching the first state and the second state.
6. A compressor; the compressor is the heart of the air conditioning system, is configured to compress and deliver the high temperature and high pressure gas refrigerant, and is connected to an end of the four-way valve.
7. A one-way valve configured to ensure that the refrigerant can only move in one direction and prevent the backward flow and the damage to the air conditioning system. Because before the refrigerant flows to the compressor, it needs to pass through air conditioning components such as an evaporator and a condenser. If the refrigerant flows back, it will cause the air conditioning system to fail and affect the refrigeration effect of the air conditioner.
8. A gas-liquid separator; it is arranged in order to separate a small amount of refrigerant that has not been completely evaporated, and ensure that the compressor does not suck in the liquid refrigerant and causes a liquid strike phenomenon, to avoid the damage of the compressor due to the liquid strike phenomenon.

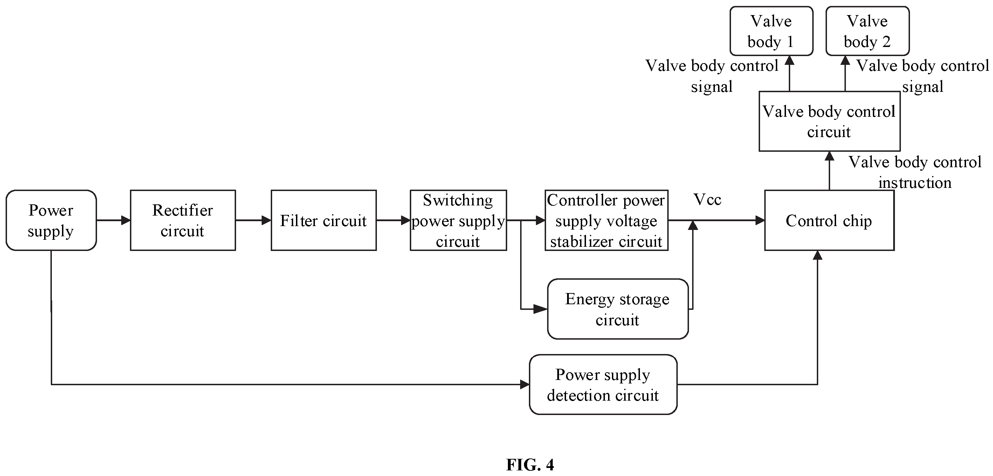

This application example provides a power failure backup power supply system of an air conditioning controller. As shown in FIG. 4, the power failure backup power supply system includes a control chip, a power supply, a controller power supply circuit, a power supply detection circuit, an energy storage circuit (that is, the energy storage circuit described above), a valve body control circuit and a valve body (a valve body 1 and a valve body 2). Exemplarily, the controller power supply circuit is configured to supply power to the control chip, and includes a power supply, a rectifier circuit, a filter circuit, a switching power supply circuit, and a controller power supply voltage stabilizer circuit. The controller power supply voltage stabilizer circuit is configured to stabilize the input voltage and then output it to the control chip, and the output voltage of the controller power supply voltage stabilizer circuit is Vcc =5V & 12V. When powered on, the switching power supply circuit (i.e., the power supply described above) supplies power to the control chip through the controller power supply voltage stabilizer circuit, and the control chip can send a valve body control signal to the valve body 1 and/or the valve body 2 through the valve body control circuit, to realize the corresponding valve body operation control of the valve body 1 and/or the valve body 2.

Assuming that in FIG. 4, the valve body 1 is an electronic expansion valve and the valve body 2 is an electric valve, the valve body operation control here may include a "zero" reset control (that is, the reset described above). The "zero" reset control of each valve body is as follows.
1. The "zero" reset control of the electronic expansion valve is performed by the specific operation steps.
   (1) The valve spool is rotated clockwise to a maximum opening position.
   (2) The valve spool is rotated counterclockwise to a minimum opening position.
   (3) The valve spool is rotated clockwise to a middle position (an opening degree required for the standby).
2. The "zero" reset control of the electric valve is performed by the specific operation steps.
   (1) The valve spool is rotated clockwise to a maximum opening position.
   (2) The valve spool is rotated counterclockwise to a minimum opening position.
   (3) The valve spool is rotated clockwise to a middle position (an opening degree required for the standby).

Here, two ends of the energy storage circuit are connected to the controller power supply voltage stabilizer circuit. When the air conditioner is not powered on, for example, in a power-off state, the energy storage circuit can generate energy, and supply power to the control chip based on the controller power supply voltage stabilizer circuit, to ensure that the control chip has sufficient energy to control the electric valve to be closed.

The energy storage circuit adopts super capacitor or lithium battery + BUCK circuit + BOOST circuit to form an energy storage circuit system, and the energy storage circuit is connected in parallel with the controller power supply circuit. When it is detected that the power supply is cut off, the energy storage circuit will automatically be integrated into the power supply network of the air conditioning controller for power supply, and the air conditioning controller program enters the valve body closing action.

In addition, the energy storage circuit includes a charging mode and a discharging mode. For example, when the energy storage circuit stores the energy by a supercapacitor, if it is determined that the capacity of the supercapacitor is insufficient, the control chip controls the energy storage circuit to switch to the charging mode, and at this time, the BUCK circuit charges the supercapacitor. When it is detected that the power supply is cut off, the control apparatus controls the energy storage circuit to switch to the discharging mode at this time, the BOOST circuit discharges outward at this time, and the energy storage circuit automatically supplies power, so that the electric valve can be controlled to perform the closing action.

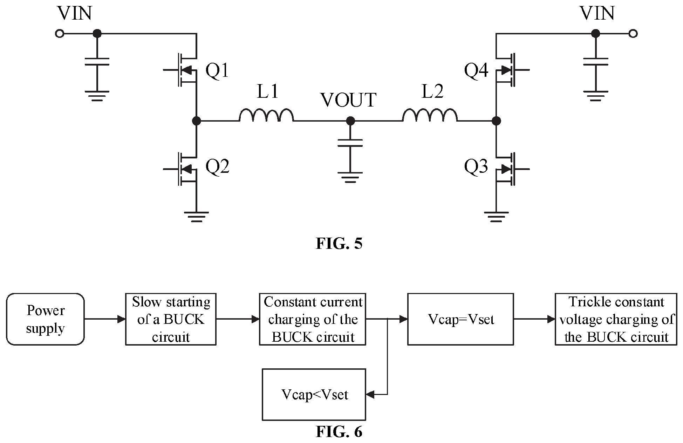

Assuming that the energy storage circuit adopts the structure of supercapacitor + BUCK circuit + BOOST circuit, the schematic diagram of the principle of the energy storage circuit is shown in FIG. 5, and the specific control principle is as follows.

The energy storage circuit consists of a supercapacitor, a BUCK circuit and a BOOST circuit. The supercapacitor selects the capacitor according to the actual energy of the product. The main power topology is realized by a combination of BUCK circuit and BOOST circuit, in which VIN is connected to 12V bus and VOUT is connected to the supercapacitor.

For a charging BUCK circuit, compared with the application of constant voltage output, the charging BUCK circuit cannot provide voltage feedback quickly during the start-up because of the large capacity of the supercapacitor and the slow change of the voltage. In addition, in the long-term charging process, it is necessary to prevent the charging current of the supercapacitor from being too large, exceeding the power supply capacity of 12V-Vin, lowering the input 12V-Vin switching power supply voltage, or causing the switching power supply protection. Therefore, it is necessary to control the charging current to be constant. The schematic diagram of the workflow of charging BUCK circuit is shown in FIG. 6, and the specific implementation process is as follows.

When the power storage circuit enters the charging mode and charging starts, the BUCK circuit is started slowly to perform the constant current charging of the BUCK circuit. At this time, it is necessary to detect the charging voltage Vcap of the BUCK circuit and compare Vcap with Vset. Here, Vset is the target charging voltage, which is set according to the actual use needs, but should pay attention to the withstand voltage specifications of the selected supercapacitor, and reserve enough withstand voltage reduction of the supercapacitor. If Vcap is less than Vset, it is necessary to control the charging voltage of the BUCK circuit to be equal to Vset, to control the charging current to be constant. If Vcap is equal to Vset, trickle constant voltage charging of the BUCK circuit is realized.

Based on this, the application example provides a power-on control method for an air conditioner with an energy storage circuit, which specifically includes three control schemes (a first scheme, a second scheme and a third scheme), and the specific contents are as follows.

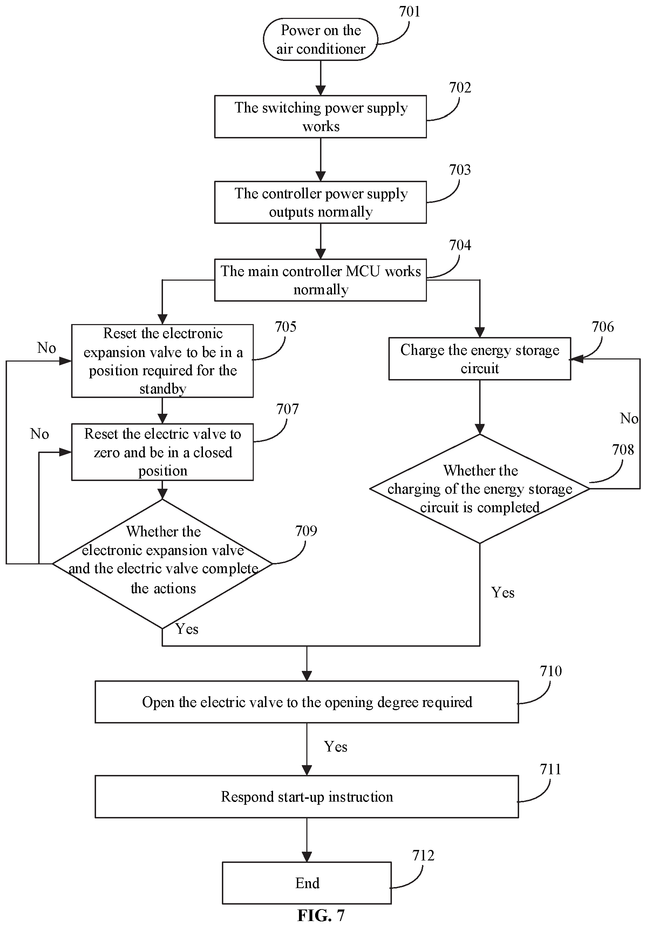

The first scheme: referring to FIG. 7, in the first scheme, the energy storage circuit is charged in the process from the initial power-on to the user start-up, which takes a short time and ensures that the energy storage circuit has sufficient energy to perform the closing action of the electric valve when the power is cut off. In addition, the charging of the energy storage circuit and the resetting of the electronic expansion valve operate simultaneously (that is, the charging of the energy storage circuit and the resetting of the electronic expansion valve are executed in parallel), which needs to increase the power of the switching power supply. However, in addition, the electronic expansion valves are reset to zero in sequence, which also reduces the power required by the switching power supply. The specific implementation operations are as follows.

At operation 701, the air conditioner is powered on.

In practical applications, a power supply state indicating whether the air conditioner is powered on is acquired.

It is determined that the air conditioner is powered on based on the power supply state, first indication information and second indication information are generated, in which the first indication information is configured to instruct the energy storage circuit to switch to the charging mode, and the second indication information is configured to reset the electronic expansion valves in sequence, then reset the electric valve and close the electric valve.

At operation 702, the switching power supply works.

In practical applications, when the air conditioner is powered on, the switching power supply works normally, that is, the switching power supply normally supplies power to the controller power supply voltage stabilizer circuit.

At operation 703, the controller power supply outputs normally.

In practical applications, the switching power supply supplies power to the controller power supply voltage stabilizer circuit, and the controller power supply outputs normally.

At operation 704, the main controller MCU works normally.

In practical applications, when the air conditioner is powered on and the controller power supply voltage stabilizer circuit normally outputs current to the main controller MCU, the main controller MCU works normally at this time.

When the power is initially powered on, the charging of the energy storage circuit and the resetting of the electronic expansion valve are operated simultaneously, that is, the operations 705 and 706 are executed simultaneously based on the first indication information and the second indication information.

At operation 705, the electronic expansion valve is reset to be at the opening degree required for the standby.

Based on the second indication information, the main controller MCU controls the electronic expansion valves to be reset in sequence and at the opening degree required for the standby based on the control circuit of the electronic expansion valve. After the electronic expansion valve is reset, operation 707 is executed.

At operation 706, the energy storage circuit is charged.

Based on the first indication information, the main controller MCU controls the energy storage circuit to enter the charging mode, the charging BUCK circuit of the energy storage circuit works to charge, and operation 708 is executed.

At operation 707, the electric valve is reset to zero and be in a closed position.

After it is determined that the electronic expansion valves are reset in sequence, the electric valve is reset to zero and is in the closed position. Here, the electric valve is reset and kept in the "minimum opening position", that is, the closed state, which can avoid the leakage of the refrigerant caused by sudden power failure in the process from power-on to start-up, and caused by the fact that the energy storage circuit does not have sufficient energy to close the electric valve. After the electric valve is reset to zero, operation 709 is executed.

At operation 708, it is determined whether the charging of the energy storage circuit is completed. If the charging of the energy storage circuit is completed, operation 710 is executed. If the charging of the energy storage circuit is not completed, operation 706 is executed.

In a practical application, if the energy storage circuit stores energy based on the supercapacitor, the voltage of the supercapacitor in the energy storage circuit may be actually detected based on the chargeable maximum voltage capacity of the supercapacitor as a judgment threshold, and the detected voltage value is compared with the judgment threshold to determine whether the charging of the energy storage circuit is completed. If the charging of the energy storage circuit is completed, operation 710 is executed. If the charging of the energy storage circuit is not completed, operation 706 is executed.

At operation 709, it is judged whether the electronic expansion valve and the electric valve complete the operation 705 and the operation 707. If the electronic expansion valve and the electric valve complete the operation 705 and the operation 707, operation 710 is executed. If the electronic expansion valve and the electric valve do not complete the operation 705 and the operation 707, operations 705 and/or 707 are executed.

At operation 710, the electric valve is opened to the opening degree required.

In a practical application, it is determined that the charging of the energy storage circuit is completed, the resetting of each electronic expansion valve is completed and the electric valve is closed, and fourth indication information is generated, in which the fourth indication information is configured to instruct the electric valve to operate to a set opening degree.

Exemplarily, before the operation 709 is executed, it is determined that the charging of the energy storage circuit is completed and the electronic expansion valve and the electric valve complete the operations 705 and 707. It is determined that the charging of the energy storage circuit is completed, the resetting of each electronic expansion valve is completed and the electric valve is closed, and fourth indication information is generated, in which the fourth indication information is configured to instruct the electric valve to operate to a set opening degree (the set opening degree here may be an opening degree required for the start-up), to execute the operation 710.

At operation 711, start-up instruction is responded.

In a practical application, when it is determined that the electric valve operates to a set opening degree, second control information is generated in response to the start-up indication information of the air conditioner, in which the second control information is configured to control a start-up operation of the air conditioner.

At operation 712, ending is performed.

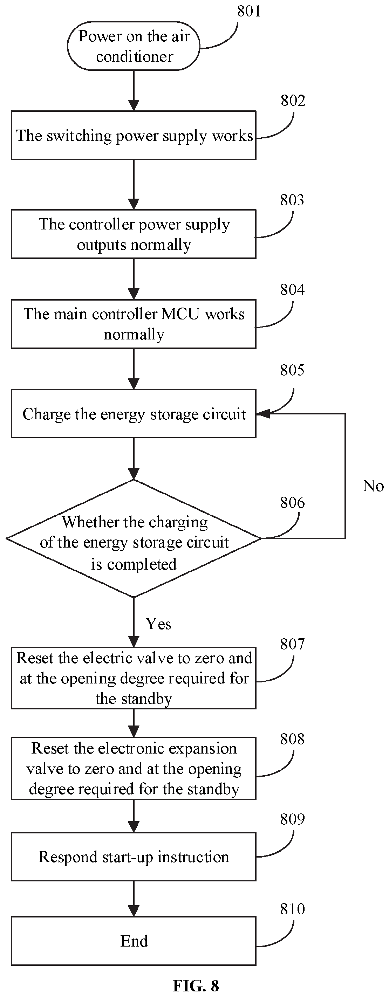

The second scheme: referring to FIG. 8, in the second scheme, the energy storage circuit is charged in the process from the initial power-on to the user start-up, which takes a short time and ensures that the energy storage circuit has sufficient energy to perform the closing action of the electric valve when the power is cut off. The electronic expansion valves are reset to zero in sequence, which also reduces the power required for the switching power supply. In addition, the energy storage circuit is charged first, and after the energy storage circuit is fully charged, the electric valve first performs a reset action (that is, the charging of the energy storage circuit and the resetting of the electric valve are executed in series), and then the electronic expansion valve performs a reset action. Compared with the first scheme, the time required for serial execution is relatively long, but in addition, the power of the switching power supply is greatly reduced, the power minimization design of the switching power supply is realized, the cost of the switching power supply is saved, and the balance of the system refrigerant can be ensured by opening the electric valve first, and the start-up instruction can be responded immediately after the electronic expansion valve completes the reset action. The specific implementation operations are as follows.

At operation 801, the air conditioner is powered on.

In practical applications, a power supply state indicating whether the air conditioner is powered on is acquired.

It is determined that the air conditioner is powered on based on the power supply state, and the first indication information is generated, in which the first indication information is configured to instruct the energy storage component to switch to the charging mode.

At operation 802, the switching power supply works.

In practical applications, when the air conditioner is powered on, the switching power supply works normally, that is, the switching power supply normally supplies power to the controller power supply voltage stabilizer circuit.

At operation 803, the controller power supply outputs normally.

In practical applications, the switching power supply supplies power to the controller power supply voltage stabilizer circuit, and the controller power supply outputs normally.

At operation 804, the main controller MCU works normally.

In practical applications, when the air conditioner is powered on and the controller power supply voltage stabilizer circuit normally outputs current to the main controller MCU, the main controller MCU works normally at this time. When the power is initially powered on, the energy storage circuit is controlled to start charging, that is, the operation 805 is executed based on the first indication information.

At operation 805, the energy storage circuit is charged.

Based on the first indication information, the main controller MCU controls the energy storage circuit to enter the charging mode, the charging BUCK circuit of the energy storage circuit works to charge, and operation 806 is executed.

At operation 806, it is determined whether the charging of the energy storage circuit is completed. If the charging of the energy storage circuit is completed, operation 807 is executed. If the charging of the energy storage circuit is not completed, operation 805 is executed.

In a practical application, when it is determined that the charging of the energy storage circuit is completed, fifth indication information is generated, in which the fifth indication information is configured to instruct the electric valve to be reset, and then instruct the electronic expansion valves to be reset in sequence.

Exemplarily, if the energy storage circuit stores energy based on the supercapacitor, the voltage of the supercapacitor in the energy storage circuit may be actually detected based on the chargeable maximum voltage capacity of the supercapacitor as a judgment threshold, and the detected voltage value is compared with the judgment threshold to determine whether the charging of the energy storage circuit is completed. If the charging of the energy storage circuit is completed, operation 807 is executed. If the charging of the energy storage circuit is not completed, operation 805 is executed.

At operation 807, the electric valve is reset to zero and at the opening degree required for the standby.

In a practical application, based on the fifth indication information, the electric valve is first instructed to be reset to zero first, and is at the opening degree required for the standby.

At operation 808, the electronic expansion valve is reset to zero and at the opening degree required for the standby.

In a practical application, after the electric valve is reset to zero, the electronic expansion valve is reset to zero and is at the opening degree required for the standby.

At operation 809, start-up instruction is responded.

It is determined that the resetting of the electric valve and the electronic expansion valves is completed, and third control information is generated in response to the start-up instruction of the air conditioner, in which the third control information is configured to control a start-up operation of the air conditioner.

At operation 810, ending is performed.

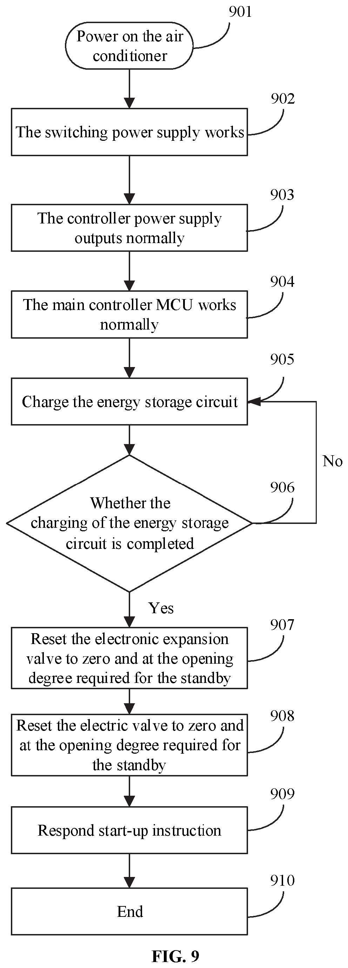

The third scheme: referring to FIG. 9, in the third scheme, the energy storage circuit is charged in the process from the initial power-on to the user start-up, which takes a short time and ensures that the energy storage circuit has sufficient energy to perform the closing action of the electric valve when the power is cut off. The electronic expansion valves are reset to zero in sequence, which also reduces the power required for the switching power supply. In addition, the energy storage circuit is charged first, and after the energy storage circuit is fully charged, the electronic expansion valve first performs a reset action (that is, the charging of the energy storage circuit and the resetting of the electronic expansion valve are executed in series), and then the electronic expansion valve performs a reset action. Compared with the first scheme, the time required for serial execution is relatively long, but in addition, the power of the switching power supply is greatly reduced, the power minimization design of the switching power supply is realized, the cost of the switching power supply is saved, and the safety can be improved by opening the electric valve later. That is, although the response to the start-up instruction is slower than that in the second scheme, the electric valve is opened only when the start-up is required, which prevents the refrigerant from entering the indoor unit. The specific implementation operations are as follows.

At operation 901, the air conditioner is powered on.

In practical applications, a power supply state indicating whether the air conditioner is powered on is acquired.

It is determined that the air conditioner is powered on based on the power supply state, and the first indication information is generated, in which the first indication information is configured to instruct the energy storage component to switch to the charging mode.

At operation 902, the switching power supply works.

In practical applications, when the air conditioner is powered on, the switching power supply works normally, that is, the switching power supply normally supplies power to the controller power supply voltage stabilizer circuit.

At operation 903, the controller power supply outputs normally.

In practical applications, the switching power supply supplies power to the controller power supply voltage stabilizer circuit, and the controller power supply outputs normally.

At operation 904, the main controller MCU works normally.

In practical applications, when the air conditioner is powered on and the controller power supply voltage stabilizer circuit normally outputs current to the main controller MCU, the main controller MCU works normally at this time. When the power is initially powered on, the energy storage circuit is controlled to start charging, that is, based on the first indication information, operation 905 is executed.

At operation 905, the energy storage circuit is charged.

Based on the first indication information, the main controller MCU controls the energy storage circuit to enter the charging mode, the charging BUCK circuit of the energy storage circuit works to charge, and operation 906 is executed.

At operation 906, it is determined whether the charging of the energy storage circuit is completed. If the charging of the energy storage circuit is completed, operation 907 is executed. If the charging of the energy storage circuit is not completed, operation 905 is executed.

In practical applications, when it is determined that the charging of the energy storage circuit is completed, sixth indication information is generated, in which the sixth indication information is configured to instruct the electronic expansion valves to be reset in sequence, and then instruct the electric valve to be reset.

Exemplarily, if the energy storage circuit stores energy based on the supercapacitor, the voltage of the supercapacitor in the energy storage circuit may be actually detected based on the chargeable maximum voltage capacity of the supercapacitor as a judgment threshold, and the detected voltage value is compared with the judgment threshold to determine whether the charging of the energy storage circuit is completed. If the charging of the energy storage circuit is completed, operation 907 is executed. If the charging of the energy storage circuit is not completed, operation 905 is executed.

At operation 907, the electronic expansion valve is reset to zero and is at the opening degree required for the standby.

In practical applications, the electronic expansion valves are instructed to be reset to zero in sequence, and are at the opening degree required for the standby.

At operation 908, the electric valve is reset to zero and at the opening degree required for the standby.

In practical applications, after the electronic expansion valves are reset to zero, the electric valve is reset to zero and is at the opening degree required for the standby.

At operation 909, start-up instruction is responded.

It is determined that the resetting of the electric valve and the electronic expansion valves is completed, and third control information is generated in response to the start-up instruction of the air conditioner, in which the third control information is configured to control a start-up operation of the air conditioner.

At operation 910, ending is performed.

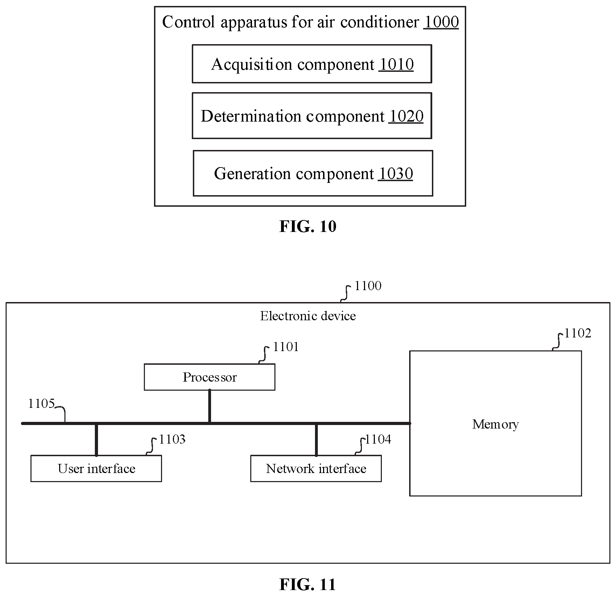

As shown in FIG. 10, the control apparatus 1000 for the air conditioner includes an acquisition component 1010 and a determination component 1020. The acquisition component 1010 is configured to acquire a power supply state indicating whether the air conditioner is powered on. The determination component 1020 is further configured to determine that the air conditioner is powered on based on the power supply state, and generate first indication information, in which the first indication information is configured to instruct the energy storage component to switch to the charging mode.

In some embodiments, the determination component 1020 is further configured to determine that the air conditioner is not powered on based on the power supply state, generate the first control information configured to instruct the energy storage component to switch to the discharging mode to supply power to the electric valve, and control the electric valve to be closed.

In some embodiments, the air conditioner further includes an electronic expansion valve corresponding to the indoor unit. The determination component 1020 is further configured to determine that the air conditioner is powered on based on the power supply state, and generate second indication information. The second indication information is configured to instruct the electronic expansion valves to be reset in sequence, then instruct the electric valve to be reset, and close the electric valve.

Alternatively, the second indication information is configured to instruct the electric valve to be reset and close the electric valve, and then instruct the electronic expansion valves to be reset in sequence.

In some embodiments, the determination component 1020 is further configured to determine that the charging of the energy storage component is completed, the resetting of each electronic expansion valve is completed and the electric valve is closed, and generate fourth indication information, in which the fourth indication information is configured to instruct the electric valve to operate to a set opening degree.

In some embodiments, the determination component 1020 is further configured to determine that the electric valve operates to the set opening degree, and generate second control information in response to start-up indication information of the air conditioner, in which the second control information is configured to control a start-up operation of the air conditioner.

In some embodiments, the air conditioner further includes a generation component 1030 configured to determine that the charging of the energy storage component is completed, and generate fifth indication information or sixth indication information. The fifth indication information is configured to instruct the electric valve to be reset, and then instruct the electronic expansion valves to be reset in sequence. The sixth indication information is configured to instruct the electronic expansion valves to be reset in sequence, and then instruct the electric valve to be reset.

In some embodiments, the generation component 1030 is further configured to determine that the resetting of the electric valve and the electronic expansion valves is completed, and generate third control information in response to the start-up instruction of the air conditioner, in which the third control information is configured to control a start-up operation of the air conditioner.

In practical applications, the acquisition component 1010, the determination component 1020, and the generation component 1030 may be implemented by a processor (also referred to as a controller) in the control apparatus for the air conditioner. Certainly, the processor needs to run computer programs in a memory to accomplish its function.

In some embodiments, the control apparatus is arranged on a main board of the outdoor unit of the air conditioner, and the control apparatus includes a controller, a power supply circuit and an energy storage circuit. The power supply circuit is configured to convert an external power supply and then supply power to the controller, and the energy storage circuit is arranged between an output end of the power supply circuit and a power supply end of the controller.

It should be noted that when the control apparatus for the air conditioner provided in the embodiments described above performs the controlling, only the division of the program modules described above is used as an example. In practical applications, the processing described above can be allocated to be completed by different program modules as necessary, that is, the internal structure of the apparatus can be divided into different program modules to complete all or part of the processing described above. In addition, the control apparatus for the air conditioner provided in the embodiments described above belongs to the same concept as the control method for the air conditioner in the embodiments, and the specific implementation process thereof is detailed in the method embodiments, which will not be described again here.

Based on the hardware implementation of the program modules described above, and in order to implement the method of the embodiments of the present application, an embodiment of the present application also provides an electronic device. FIG. 11 shows only an exemplary structure of the electronic device, but not all of the structure thereof, and some or all of the structure shown in FIG. 11 may be implemented as necessary.

As shown in FIG. 11, an electronic device 1100 provided by the embodiment of the present application includes at least one processor 1101, a memory 1102, a user interface 1103, and at least one network interface 1104. The various components in the electronic device 1100 are coupled together by a bus system 1105. It will be appreciated that the bus system 1105 is configured to enable connection communication between these components. The bus system 1105 includes a power bus, a control bus, and a status signal bus in addition to a data bus. However, for clarity of illustration, the various buses are labeled as the bus system 1105 in FIG. 11.

The user interface 1103 may include a display, a keyboard, a mouse, a trackball, a click wheel, a key, a button, a touch pad, a touch screen, or the like.

The memory 1102 in the embodiment of the present application is configured to store various types of data to support the operations of the electronic device. Examples of such data include any computer program operated on the electronic device.

The control method for the air conditioner disclosed in the embodiments of the present application may be applied to the processor 1101 or may be implemented by the processor 1101. The processor 1101 may be an integrated circuit chip which has the signal processing capability. In implementation, the operations of the control method for the air conditioner may be completed by integrated logic circuits of hardware in the processor 1101 or instructions in the form of software. The processor 1101 described above may be a general purpose processor, a Digital Signal Processor (DSP), other programmable logic devices, discrete gate or transistor logic devices, discrete hardware components, or the like. The processor 1101 may implement or execute the methods, operations, and logical block diagrams disclosed in the embodiments of the present application. The general purpose processor may be a microprocessor or any conventional processor or the like. The operations of the method disclosed in connection with the embodiments of the present application may be directly embodied as execution by a hardware decoding processor, or may be executed by the combination of hardware and software modules in the decoding processor. The software modules may be located in a storage medium located in the memory 1102, and the processor 1101 reads the information in the memory 1102, and completes the operations of the control method for the air conditioner provided by the embodiment of the present application in combination with the hardware thereof.

In an exemplary embodiment, the electronic device may be implemented by one or more of an Application Specific Integrated Circuit (ASIC), DSP, a Programmable Logic Device (PLD), a Complex Programmable Logic Device (CPLD), a Field Programmable Gate Array (FPGA), a general purpose processor, a controller, a Micro Controller Unit (MCU), a Microprocessor, or other electronic components to execute the method described above.

It will be appreciated that the memory 1102 may be a volatile or non-volatile memory, and may include a volatile memory and a non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disk, or a Compact Disc Read-Only Memory (CD-ROM). The magnetic surface memory may be a magnetic disk memory or a magnetic tape memory. The volatile memory may be a Random Access Memory (RAM), which serves as an external cache. By way of example, but not limitation, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in embodiments of the present application is intended to include, but is not limited to, these and any other suitable types of memory.

In an exemplary embodiment, an embodiment of the present application also provides a storage medium, that is, a computer storage medium, which may be a computer-readable storage medium, for example, including a memory 1102 storing computer programs. The computer programs described above can be executed by the processor 1101 of the electronic device to complete the operations of the method of the embodiments of the present application. The computer-readable storage medium may be a memory such as a ROM, a PROM, an EPROM, an EEPROM, a Flash Memory, a magnetic surface memory, an optical disk, or a CD-ROM.

## Claims

1. A control method for an air conditioner, wherein the air conditioner comprises indoor units, an outdoor unit and an energy storage component, a refrigerant pipeline being arranged between the indoor units and the outdoor unit, an electric valve being arranged on the refrigerant pipeline, and the method comprises:
acquiring a power supply state indicating whether the air conditioner is powered on; and
determining that the air conditioner is powered on based on the power supply state, and generating first indication information, wherein the first indication information is configured to instruct the energy storage component to switch to a charging mode.

2. The method according to claim 1, further comprising:
determining that the air conditioner is not powered on based on the power supply state, generating first control information configured to instruct the energy storage component to switch to a discharging mode to supply power to the electric valve, and controlling the electric valve to be closed.

3. The method according to claim 1, wherein the air conditioner further comprises a plurality of electronic expansion valves respectively corresponding to the indoor units, and the method further comprises:
determining that the air conditioner is powered on based on the power supply state, and generating second indication information,
wherein:
the second indication information is configured to instruct the plurality of electronic expansion valves to be reset in sequence and then instruct the electric valve to be reset and closed; or
the second indication information is configured to instruct the electric valve to be reset and closed, and then instruct the plurality of electronic expansion valves to be reset in sequence.

4. The method according to claim 3, further comprising:
determining that charging of the energy storage component is completed, resetting of the plurality of electronic expansion valves is completed and the electric valve is closed, and generating fourth indication information, wherein the fourth indication information is configured to instruct the electric valve to operate to a set opening degree.

5. The method according to claim 4, further comprising:
determining that the electric valve operates to the set opening degree, and generating second control information in response to start-up indication information of the air conditioner, wherein the second control information is configured to control a start-up operation of the air conditioner.

6. The method according to claim 1, wherein the air conditioner further comprises a plurality of electronic expansion valves respectively corresponding to the indoor units, and the method further comprises:
determining that charging of the energy storage component is completed, and generating fifth indication information or sixth indication information,
wherein:
the fifth indication information is configured to instruct the electric valve to be reset, and then instruct the plurality of electronic expansion valves to be reset in sequence; and
the sixth indication information is configured to instruct the plurality of electronic expansion valves to be reset in sequence, and then instruct the electric valve to be reset.

7. The method according to claim 6, further comprising:
determining that resetting of the electric valve and the plurality of electronic expansion valves is completed, and generating third control information in response to a start-up instruction of the air conditioner, wherein the third control information is configured to control a start-up operation of the air conditioner.

8. A control apparatus for an air conditioner, wherein the air conditioner comprises indoor units, an outdoor unit and an energy storage component, a refrigerant pipeline being arranged between the indoor units and the outdoor unit, an electric valve being arranged on the refrigerant pipeline, and the control apparatus comprises:
an acquisition component configured to acquire a power supply state indicating whether the air conditioner is powered on; and
a determination component configured to determine that the air conditioner is powered on based on the power supply state, and generate first indication information, wherein the first indication information is configured to instruct the energy storage component to switch to a charging mode.

9. The control apparatus according to claim 8, wherein the control apparatus is arranged on a main board of the outdoor unit of the air conditioner, and the control apparatus comprises a controller, a power supply circuit and an energy storage circuit, wherein the power supply circuit is configured to convert an external power supply and then supply power to the controller, and the energy storage circuit is arranged between an output end of the power supply circuit and a power supply end of the controller.

10. An electronic device, comprising a processor and a memory for storing computer programs executable on the processor,
wherein the processor is configured to execute steps of the method according to any one of claims 1 to 7 when running the computer programs.

11. A computer storage medium having stored thereon computer programs, wherein the computer programs, when executed by a processor, perform steps of the method according to any one of claims 1 to 7.
